# EUROPEAN PATENT APPLICATION

(11) **EP 4 141 985 A1**
(43) Date of publication of application: **01.03.2023**
(21) Application number: 22191392.4
(22) Date of filing: 22.08.2022
(51) Int. Cl.: H01M 4/131, H01M 4/36, H01M 4/525

(54) **POSITIVE ELECTRODE AND NONAQUEOUS ELECTROLYTE SECONDARY BATTERY INCLUDING THE SAME**

(30) Priority: 31.08.2021 JP 2021141043
(71) Applicant: Prime Planet Energy & Solutions, Inc., Chuo-ku Tokyo 103-0022 (JP)
(72) Inventor: HIRATSUKA, Hidekazu, Tokyo, 103-0022 (JP); UEHARA, Yukitoshi, Tokyo, 103-0022 (JP); TERAUCHI, Masumi, Tokyo, 103-0022 (JP)
(74) Representative: Kuhnen & Wacker Patent- und Rechtsanwaltsbüro PartG mbB

(57) **Abstract**

Provided is a positive electrode capable of increasing capacity and output of a nonaqueous electrolyte secondary battery. A positive electrode disclosed here includes a positive electrode current collector and a positive electrode active material layer supported by the positive electrode current collector. The positive electrode active material layer includes particles of a lithium composite oxide having a layered structure as a positive electrode active material. The positive electrode active material layer has a porosity of 17% to 20%. A peak pore size in pore distribution of the positive electrode active material layer measured by mercury intrusion porosimetry is 0.400 pm to 0.550 pm.

## Description

### TECHNICAL FIELD

The present disclosure relates to a positive electrode. The present disclosure also relates to a nonaqueous electrolyte secondary battery including the positive electrode.

### BACKGROUND ART

Recent nonaqueous electrolyte secondary batteries such as lithium ion secondary batteries are suitably used for portable power supplies for, for example, personal computers and portable terminals, and vehicle driving power supplies for, for example, battery electric vehicles (BEV), hybrid electric vehicles (HEV), and plug-in hybrid electric vehicles (PHEV), and so forth.

A positive electrode of a nonaqueous electrolyte secondary battery generally employs a positive electrode active material layer including a particulate lithium composite oxide as a positive electrode active material (see, for example, Patent Documents 1 and 2). With widespread use of nonaqueous electrolyte secondary batteries, these batteries are required of further enhanced performance. It is known that capacity of a nonaqueous electrolyte secondary battery can be increased by reducing porosity by compressing a positive electrode active material layer, that is, increasing density of the positive electrode active material layer (see, for example, Patent Document 3).

### CITATION LIST

### PATENT DOCUMENTS

Patent Document 1: JP2010-86693A
Patent Document 2: JP6859888B
Patent Document 3: WO2014/118834

### SUMMARY OF THE INVENTION

However, in the case where porosity of the positive electrode active material layer is reduced in order to increase capacity, a contact area between a nonaqueous electrolyte and a positive electrode active material decreases in the positive electrode active material layer, and thus resistance increases, resulting in trade-off. Thus, in the nonaqueous electrolyte secondary battery, it is difficult to increase both capacity and output at the same time.

It is therefore an object of the present disclosure to provide a positive electrode capable of increasing capacity and output of a nonaqueous electrolyte secondary battery.

A positive electrode disclosed here includes: a positive electrode current collector; and a positive electrode active material layer supported by the positive electrode current collector. The positive electrode active material layer includes particles of a lithium composite oxide having a layered structure as a positive electrode active material. The positive electrode active material layer has a porosity of 17% to 20%. A peak pore size in pore distribution of the positive electrode active material layer measured by mercury intrusion porosimetry is 0.400 µm to 0.550 µm. This configuration can provide a positive electrode capable of increasing capacity and output of a nonaqueous electrolyte secondary battery.

In a desired aspect of the positive electrode disclosed here, the positive electrode active material layer has a porosity of 17% to 19%. This configuration can provide the nonaqueous electrolyte secondary battery with especially large capacity.

In a desired aspect of the positive electrode disclosed here, the peak pore size is 0.500 µm to 0.530 µm. This configuration can provide the nonaqueous electrolyte secondary battery with especially high output.

In a desired aspect of the positive electrode disclosed here, the lithium composite oxide is a nickel cobalt manganese composite oxide. This configuration can provide the nonaqueous electrolyte secondary battery with excellent battery characteristics such as low initial resistance.

In a further desired aspect of the positive electrode disclosed here, a content of nickel in entire metal elements except for lithium in the lithium nickel cobalt manganese composite oxide is 55 mol% or more. This configuration can provide the nonaqueous electrolyte secondary battery with especially large capacity.

In another aspect, a nonaqueous electrolyte secondary battery disclosed here includes the positive electrode described above, a negative electrode, and a nonaqueous electrolyte. This configuration can provide the nonaqueous electrolyte secondary battery having large capacity and high output.

### BRIEF DESCRIPTION OF THE DRAWINGS

FIG. 1 is a cross-sectional view schematically illustrating a positive electrode according to one embodiment of the present disclosure.
FIG. 2 is a cross-sectional view schematically illustrating an internal structure of a lithium ion secondary battery according to one embodiment of the present disclosure.
FIG. 3 is a schematic disassembled view illustrating a structure of a wound electrode body of a lithium ion secondary battery according to one embodiment of the present disclosure.

### DETAILED DESCRIPTION OF THE PREFERRED EMBODIMENTS

Embodiments of the present disclosure will be described with reference to the drawings. Matters not mentioned in the specification but required for carrying out the present disclosure can be understood as matters of design of a person skilled in the art based on the related art in the field. The present disclosure can be carried out on the basis of the contents disclosed in the description and common general technical knowledge in the field. In the drawings, members and parts having the same functions are denoted by the same reference characters for description. Dimensional relationships (e.g., length, width, and thickness) in the drawings do not reflect actual dimensional relationships. A numerical range expressed as "A to B" herein includes A and B.

A "secondary battery" herein refers to a power storage device capable of being repeatedly charged and discharged, and includes a so-called storage battery and a power storage device such as an electric double layer capacitor. A "lithium ion secondary battery" herein refers to a secondary battery using lithium ions as a charge carrier and performs charging and discharging by movement of charges accompanied with lithium ions between positive and negative electrodes.

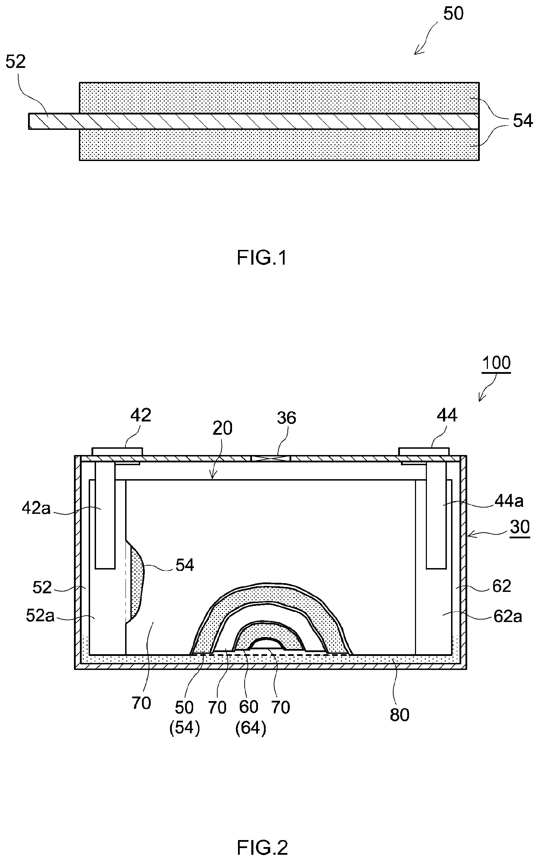

The present disclosure will now be described in detail using a positive electrode for use in a lithium ion secondary battery as an example, but it is not intended to limit the present disclosure to the embodiment described below. FIG. 1 is a schematic cross-sectional view of a positive electrode according to an embodiment, taken along the thickness direction.

As illustrated in FIG. 1, a positive electrode 50 includes a positive electrode current collector 52 and a positive electrode active material layer 54 supported by the positive electrode current collector 52. In the illustrated example, the positive electrode active material layer 54 is provided on both surfaces of the positive electrode current collector 52. Alternatively, the positive electrode active material layer 54 may be provided on one surface of the positive electrode current collector 52. Desirably, the positive electrode active material layer 54 is provided on both surfaces of the positive electrode current collector 52.

As the positive electrode current collector 52, a known positive electrode current collector for use in a lithium ion secondary battery may be used, and examples of the positive electrode current collector include sheets or foil of highly conductive metals (e.g., aluminium, nickel, titanium, and stainless steel). The positive electrode current collector 52 is desirably aluminium foil.

Dimensions of the positive electrode current collector 52 are not specifically limited, and may be appropriately determined depending on battery design. In the case of using aluminium foil as the positive electrode current collector 52, the thickness thereof is not specifically limited, and is, for example, 5 µm or more and 35 µm or less and desirably 7 µm or more and 20 µm or less.

In this embodiment, the positive electrode active material layer 54 has a porosity of 17% to 20%. In addition, in this embodiment, a peak pore size in pore distribution of the positive electrode active material layer 54 measured by mercury intrusion porosimetry is 0.400 µm to 0.550 µm.

The positive electrode active material layer 54 includes particles of a lithium composite oxide having a layered structure as a positive electrode active material. Thus, gaps are formed between the particles. A nonaqueous electrolyte can enter the gaps.

In general, when a filling rate of a positive electrode active material in a positive electrode active material layer is increased, capacity of a nonaqueous electrolyte secondary battery can be increased. However, if the filling rate of the positive electrode active material in the positive electrode active material layer is increased, porosity of the positive electrode active material layer decreases, and gaps where the nonaqueous electrolyte can enter decreases. Accordingly, in the positive electrode active material layer, a contact area between the nonaqueous electrolyte and the positive electrode active material decreases so that resistance increases, resulting in trade-off therebetween. Thus, in the nonaqueous electrolyte secondary battery, it is difficult to increase both capacity and output at the same time.

On the other hand, inventors of the present disclosure have made intensive studies on capacity and output of a nonaqueous electrolyte secondary battery by performing control on porosity and porous size of a positive electrode active material layer by means of using particles of lithium composite oxide having different particle properties in combination. Consequently, the inventors have obtained a novel positive electrode active material layer that achieves both a relatively low porosity and a relatively large peak present size, as compared to a typical positive electrode active material layer. Then, by using a positive electrode including this novel positive electrode active material layer, both increased capacity and increased output of a nonaqueous electrolyte secondary battery have been achieved at the same time.

Specifically, the positive electrode 50 according to this embodiment in which porosity and peak pore size of the positive electrode active material layer 54 are appropriately controlled can increase capacity of the nonaqueous electrolyte secondary battery as well as output of the nonaqueous electrolyte secondary battery.

Specifically, since the positive electrode active material layer 54 has a porosity of 17% or more and a peak pore size of 0.400 µm or more, output of the nonaqueous electrolyte secondary battery can be increased. On the other hand, since the positive electrode active material layer 54 has a porosity of 20% or less and a peak pore size of 0.550 µm or less, capacity of the nonaqueous electrolyte secondary battery can be increased.

In the nonaqueous electrolyte secondary battery, through repetitive charging and discharging, side reaction occurs between the positive electrode active material and the nonaqueous electrolyte so that the nonaqueous electrolyte is decomposed and a gas can be generated. If the gas remains in an electrode body, degradation of battery characteristics (especially capacity degradation) can occur. However, in the positive electrode 50 according to this embodiment, since the porosity and the peak pore size are within the ranges described above, side reaction is less likely to occur between the positive electrode active material and the nonaqueous electrolyte. Thus, the positive electrode 50 according to this embodiment can also suppress degradation of battery characteristics (especially capacity degradation) in repetitive charging and discharging of the nonaqueous electrolyte secondary battery.

The porosity of the positive electrode active material layer 54 is desirably 17% to 19%. The peak pore size of the positive electrode active material layer 54 is desirably 0.450 µm or more, more desirably 0.480 µm or more, and much more desirably 0.500 µm or more. The peak pore size of the positive electrode active material layer 54 is desirably 0.530 µm or less.

The porosity of the positive electrode active material layer 54 can be obtained by mercury intrusion porosimetry. Specifically, the porosity can be obtained by a known method using a mercury intrusion porosimeter. Thus, measurement according to a known method with a mercury intrusion porosimeter can obtain a porosity of the positive electrode active material layer 54 and a peak pore size in pore distribution. Specifically, for example, pore distribution of the positive electrode active material layer is measured within a pressure range of 4 psi to 60000 psi, and using a pore distribution curve in the pore size range of 0.01 µm to 10 µm, a peak pore size and a porosity can be obtained.

Examples of the lithium composite oxide having a layered structure include a lithium nickel composite oxide, a lithium cobalt composite oxide, a lithium manganese composite oxide, a lithium nickel cobalt manganese composite oxide, a lithium nickel cobalt aluminium composite oxide, and a lithium iron nickel manganese composite oxide. The fact that lithium composite oxide particles have a layered structure (i.e., layered crystal structure) can be confirmed by a known method (e.g., X-ray diffraction).

It should be noted that the "lithium nickel cobalt manganese composite oxide" herein includes not only oxides including Li, Ni, Co, Mn, and O as constituent elements, but also an oxide including one or more additive elements besides the foregoing elements. Examples of the additive element include transition metal elements and typical metal elements, such as Mg, Ca, Al, Ti, V, Cr, Y, Zr, Nb, Mo, Hf, Ta, W, Na, Fe, Zn, and Sn. The additive element may be a metalloid element such as B, C, Si, or P, and a nonmetal element such as S, F, Cl, Br, or I. This also applies, in the same manner, for, for example, the lithium nickel composite oxide, the lithium cobalt composite oxide, the lithium manganese composite oxide, the lithium nickel cobalt aluminium composite oxide, and the lithium iron nickel manganese composite oxide described above.

Because of excellent properties such as a small initial resistance, the lithium composite oxide having a layered structure is desirably the lithium nickel cobalt manganese composite oxide. From the viewpoint of further increasing capacity of the nonaqueous electrolyte secondary battery, the content of nickel in the entire metal elements except for lithium in the lithium nickel cobalt manganese composite oxide desirably exceeds 50 mol%, and is more desirably 55 mol% or more.

Specifically, the lithium nickel cobalt manganese composite oxide desirably has the composition expressed by Formula (I):

Li₁₊ₓNi_{y}Co_{z}Mn_{(1-y-z)}M_{α}O_{2-β}Q_{β} (I)

In Formula (I), x, y, z, α, and β respectively satisfy -0.3 ≤ x ≤ 0.3, 0.1 < y < 0.9, 0.1 < z < 0.5, 0 ≤ α ≤ 0.1, and 0 ≤ β ≤ 0.5. M is at least one element selected from the group consisting of Zr, Mo, W, Mg, Ca, Na, Fe, Cr, Zn, Sn, and Al. Q is at least one element selected from the group consisting of F, Cl, and Br.

In Formula (I), x, y, z, α, and β respectively satisfy -0.3 ≤ x ≤ 0.3, 0.1 < y < 0.9, 0 < z < 0.5, 0 ≤ α ≤ 0.1, and 0 ≤ β ≤ 0.5. M is at least one element selected from the group consisting of Zr, Mo, W, Mg, Ca, Na, Fe, Cr, Zn, Sn, B, and Al. Q is at least one element selected from the group consisting of F, Cl, and Br.

From the viewpoint of further increasing capacity of the nonaqueous electrolyte secondary battery, y and z respectively desirably satisfy 0.50 < y ≤ 0.95, 0.02 ≤ z < 0.48, and more desirably satisfy 0.55 ≤ y ≤ 0.95, 0.02 ≤ z ≤ 0.43, and much more desirably satisfy 0.60 ≤ y ≤ 0.95, 0.02 ≤ z ≤ 0.38.

The positive electrode active material layer 54 may include components other than the positive electrode active material, such as trilithium phosphate, a conductive agent, and a binder. Desired examples of the conductive agent include carbon black such as acetylene black (AB) and other carbon materials (e.g., graphite). Examples of the binder include polyvinylidene fluoride (PVDF).

The content of the positive electrode active material in the positive electrode active material layer 54 (i.e., content of the positive electrode active material with respect to the total mass of the positive electrode active material layer 54) is not specifically limited, and is desirably 70 mass% or more, more desirably 80 mass% or more and 97 mass% or less, and much more desirably 85 mass% or more and 96 mass% or less. The content of trilithium phosphate in the positive electrode active material layer 54 is not specifically limited, and is desirably 1 mass% or more and 15 mass% or less, and more desirably 2 mass% or more and 12 mass% or less. The content of the conductive agent in the positive electrode active material layer 54 is not specifically limited, and is desirably 1 mass% or more and 15 mass% or less, and more desirably 3 mass% or more and 13 mass% or less. The content of the binder in the positive electrode active material layer 54 is not specifically limited, and is desirably 1 mass% or more and 15 mass% or less, and more desirably 1.5 mass% or more and 10 mass% or less.

The thickness of the positive electrode active material layer 54 is not specifically limited, and is, for example, 10 µm or more and 300 µm or less, and desirably 20 µm or more and 200 µm or less.

In the positive electrode active material layer non-formed portion 52a of the positive electrode sheet 50, an insulating protective layer (not shown) including insulating particles may be provided at a location adjacent to the positive electrode active material layer 54. This protective layer can prevent short circuit between the positive electrode active material layer non-formed portion 52a and the negative electrode active material layer 64.

The method for obtaining the positive electrode active material layer 54 having the porosity within the range described above and the peak pore size within the range described above is not specifically limited. Desired examples of the method include a method of using two types of positive electrode active material particles having different particle properties.
(1) first lithium composite oxide particles having a layered structure, an average particle size of 3.0 µm to 6.0 µm, and a DBP absorption value of 15 mL/100g to 27 mL/100g; and
(2) second lithium composite oxide particles having a layered structure, an average particle size of 10.0 µm to 22.0 µm, and a DBP absorption value of 14 mL/100g to 22 mL/100g.

The first lithium composite oxide particles and the second lithium composite oxide particles will now be specifically described. The first lithium composite oxide particles and the second lithium composite oxide particles are both lithium composite oxide particles having layered structures, and may have the same composition or different compositions. The first lithium composite oxide particles and the second lithium composite oxide particles are desirably particles of lithium nickel cobalt manganese composite oxide.

From the viewpoint of further increasing capacity, in the first lithium composite oxide particles, the content of nickel in the entire metal elements except for lithium in the lithium nickel cobalt manganese composite oxide is desirably 55 mol% or more, and more desirably 60 mol% or more. From the viewpoint of further increasing capacity, in the second lithium composite oxide particles, the content of nickel in the entire metal elements except for lithium in the lithium nickel cobalt manganese composite oxide is desirably more than 50 mol%, and more desirably 55 mol% or more.

From the viewpoint of an energy density, in the first lithium composite oxide particles, y and z in Formula (I) respectively desirably satisfy 0.55 ≤ y ≤ 0.95, 0.02 ≤ z ≤ 0.43, and more desirably satisfy 0.60 ≤ y ≤ 0.95, 0.02 ≤ z ≤ 0.38. From the viewpoint of an energy density, in the second lithium composite oxide particles, y and z in Formula (I) respectively desirably satisfy 0.50 < y ≤ 0.95, 0.02 ≤ z < 0.48, and more desirably satisfy 0.55 ≤ y ≤ 0.95, 0.02 ≤ z ≤ 0.43.

It should be noted that an average particle size (D50) of lithium composite oxide particles herein refers to a median particle size (D50), and means a particle size corresponding to a cumulative frequency of 50 vol% from the small-size particle side in volume-based particle size distribution based on a laser diffraction and scattering method. Thus, the average particle size (D50) can be obtained by using, for example, a particle size distribution analyzer of a laser diffraction and scattering type.

The average particle sizes of the first and second lithium composite oxide particles can be adjusted by a known method (e.g., pulverization or classification).

The DBP absorption values of the first and second lithium composite oxide particles can be adjusted by using secondary particles in which primary particles agglomerate as lithium composite oxide particles and changing the primary particle size, for example. Alternatively, the DBP absorption values of the first and second lithium composite oxide particles can be adjusted by changing the internal gap amount of the lithium composite oxide particles.

For example, in a case where secondary particles in which primary particles agglomerate are used as the first lithium composite oxide particles and its average primary particle size is about 1.4 µm to 2.5 µm, the DBP absorption value of the first lithium composite oxide particles can be easily adjusted to the range of 15 mL/100g to 27 mL/100g. In particular, single particles can form secondary particles in which several particles agglomerate. Thus, it is desirable to use single particles, especially, single particles having an average primary particle size of about 1.4 µm to 2.5 µm, as the first lithium composite oxide particles. The "single particles" herein refer to particles generated with growth of single crystal nuclei, and thus, particles of single crystal including no grain boundary. The fact that particles are single crystal can be confirmed by analysis of an electron diffraction image obtained by a transmission electron microscope (TEM), for example.

For example, in a case where secondary particles in which primary particles agglomerate are used as the second lithium composite oxide particles and its average primary particle size is about 0.1 µm to 0.3 µm, the DBP absorption value of the second lithium composite oxide particles can be easily adjusted to the range of 14 mL/100g to 22 mL/100g.

In a desired embodiment of the positive electrode active material according to this embodiment, the first lithium composite oxide particles are single particles having an average primary particle size of 1.4 µm to 2.5 µm and agglomerated particles thereof, and the second lithium composite oxide particles are secondary particles in which primary particles having an average primary particle size of 0.1 to 0.3 µm agglomerate.

The average primary particle size herein refers to an average long diameter of 50 or more arbitrarily selected primary particles obtained from an electron microscopic image of lithium composite oxide particles. Thus, the average primary particle size can be obtained by acquiring a scanning electron microscope (SEM) image of lithium composite oxide particles with, for example, a SEM and obtaining long diameters of 50 or more arbitrarily selected primary particles with image analysis type particle size distribution measurement software (e.g., "Mac-View") to calculate an average of the long diameters.

Since the nonaqueous electrolyte secondary battery with excellent output characteristics can be provided, the dibutyl phthalate absorption value of the first lithium composite oxide particles is desirably 18 mL/100g to 27 mL/100g, and more desirably 18 mL/100g to 25 mL/100g. Since the nonaqueous electrolyte secondary battery with excellent output characteristics can be provided, the dibutyl phthalate absorption value of the second lithium composite oxide particles is desirably 16 mL/100g to 22 mL/100g, and more desirably 16.5 mL/100g to 21.5 mL/100g.

The average particle size (D50) of the first lithium composite oxide particles is desirably 3.0 µm to 5.5 µm, and more desirably 3.0 µm to 5.0 µm. The average particle size (D50) of the second lithium composite oxide particles is desirably 10.0 µm to 21.0 µm, and more desirably 10.0 µm to 20.0 µm.

Since the nonaqueous electrolyte secondary battery with excellent output characteristics can be provided, a BET specific surface area of the first lithium composite oxide particles is desirably 0.54 m²/g or more, and more desirably 0.54 m²/g to 0.69 m²/g. Since the nonaqueous electrolyte secondary battery with excellent output characteristics can be provided, a BET specific surface area of the second lithium composite oxide particles is desirably 0.18 m²/g or more, and more desirably 0.18 m²/g to 0.36 m²/g.

The BET specific surface areas of the first and second lithium composite oxide particles can be measured by a nitrogen adsorption method with a commercially available surface area analyzer (e.g., "Macsorb Model-1208," manufactured by Mountech Co., Ltd.).

Since capacity of the nonaqueous electrolyte secondary battery can be particularly increased, the tap density of the first lithium composite oxide particles is desirably 2.0 g/cm³ or more, and more desirably 2.0 g/cm³ to 2.2 g/cm³. Since capacity of the nonaqueous electrolyte secondary battery can be particularly increased, the tap density of the second lithium composite oxide particles is desirably 2.4 g/cm³ or more, and more desirably 2.4 g/cm³ to 2.5 g/cm³.

The tap densities of the first and second lithium composite oxide particles can be obtained by measuring powder packing density after tapping 2000 times at an amplitude of 8 mm by using a commercially available tapping machine (e.g., "KRS-409" manufactured by Kuramochi Kagaku Kiki. Seisakusho) and calculating an average of two measurement results of the powder packing density.

The contents of the first and second lithium composite oxide particles are not specifically limited. The mass ratio thereof (i.e., first lithium composite oxide particles : second lithium composite oxide particles) is, for example, 10 : 90 to 90 : 10, desirably 20 : 80 to 80 : 20, more desirably 30 : 70 to 70 : 30, and much more desirably 30 : 70 to 60 : 40.

The positive electrode active material may consist only of the first lithium composite oxide particles and the second lithium composite oxide particles. Alternatively, the positive electrode active material may further include particles functioning as a positive electrode active material besides the first lithium composite oxide particles and the second lithium composite oxide particles.

The tap density of the entire positive electrode active material is not specifically limited. Since the capacity and output of the nonaqueous electrolyte secondary battery can be particularly increased, the tap density of the entire positive electrode active material is desirably 2.7 g/cm³ to 3.0 g/cm³, more desirably 2.8 g/cm³ to 3.0 g/cm³, and much more desirably 2.9 g/cm³ to 3.0 g/cm³.

The tap density of the entire positive electrode active material can be obtained by measuring a powder packing density after tapping 2000 times at an amplitude of 8 mm by using a commercially available tapping machine (e.g., "KRS-409" (manufactured by Kuramochi Kagaku Kiki. Seisakusho) and calculating an average of two measurement results of the powder packing density.

The DBP absorption value of the entire positive electrode active material is not specifically limited. Since the capacity and output of the nonaqueous electrolyte secondary battery can be particularly increased, the dibutyl phthalate absorption value of the entire positive electrode active material is desirably 14.5 mL/100g to 18.5 mL/100g, more desirably 16.2 mL/100g to 18.2 mL/100g, and much more desirably 17.0 mL/100g to 18.0 mL/100g.

The DBP absorption amount of the entire positive electrode active material can be measured according to a method described in JIS K6217-4: 2008 by using dibutyl phthalate (DBP) as a reagent liquid, and can be obtained as an average of three measurement results.

The positive electrode 50 according to this embodiment can be produced by preparing a paste for forming a positive electrode active material layer, including first lithium composite oxide particles, second lithium composite oxide particles, a solvent (dispersion medium), and when necessary, a binder, a conductive agent, and the like, then applying the paste onto the positive electrode current collector 52, drying the paste, and when necessary, performing pressing treatment.

The positive electrode according to this embodiment can increase capacity of the nonaqueous electrolyte secondary battery and increase output of the nonaqueous electrolyte secondary battery. The positive electrode according to this embodiment can provide the nonaqueous electrolyte secondary battery with high resistance to capacity degradation in repetitive charging and discharging. The positive electrode according to this embodiment is typically a positive electrode active material for a nonaqueous electrolyte secondary battery, and is desirably a positive electrode for a nonaqueous lithium ion secondary battery. The positive electrode according to this embodiment can also be used as a positive electrode for an all-solid-state secondary battery.

In another aspect, the nonaqueous electrolyte secondary battery according to this embodiment includes a positive electrode, a negative electrode, and a nonaqueous electrolyte, and the positive electrode is the positive electrode according to the embodiment described above.

The nonaqueous electrolyte secondary battery according to this embodiment will now be described using an example of a flat square lithium ion secondary battery including a flat wound electrode body and a flat battery case. The nonaqueous electrolyte secondary battery according to this embodiment, however, is not limited the following examples.

A lithium ion secondary battery 100 illustrated in FIG. 2 is a sealed battery in which a flat wound electrode body 20 and a nonaqueous electrolyte (not shown) are housed in a flat square battery case (i.e., outer container) 30. The battery case 30 includes a positive electrode terminal 42 and a negative electrode terminal 44 for external connection, and a thin safety valve 36 configured such that when the internal pressure of the battery case 30 increases to a predetermined level or more, the safety valve 36 releases the internal pressure. The positive and negative electrode terminals 42 and 44 are electrically connected to positive and negative electrode current collector plates 42a and 44a, respectively. A material for the battery case 30 is, for example, a metal material that is lightweight and has high thermal conductivity, such as aluminium. A current interrupt device (CID) may be disposed between the positive electrode terminal 42 and the positive electrode current collector plate 42a or between the negative electrode terminal 44 and the negative electrode current collector plate 44a.

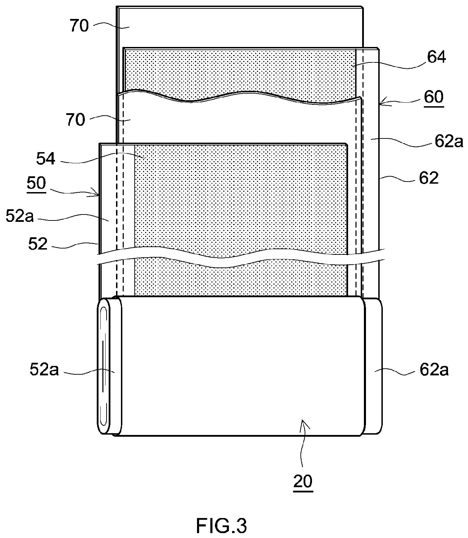

As illustrated in FIGS. 2 and 3, in the wound electrode body 20, a positive electrode sheet 50 and a negative electrode sheet 60 are stacked with two long separator sheets 70 interposed therebetween and wound in the longitudinal direction. In the positive electrode sheet 50, a positive electrode active material layer 54 is formed on one or each (each in this example) surface of a long positive electrode current collector 52 along the longitudinal direction. In the negative electrode sheet 60, a negative electrode active material layer 64 is formed on one or each (each in this example) of a long negative electrode current collector 62 along the longitudinal direction.

A positive electrode active material layer non-formed portion 52a (i.e., a portion where no positive electrode active material layer 54 is formed and the positive electrode current collector 52 is exposed) and a negative electrode active material layer non-formed portion 62a (i.e., a portion where no negative electrode active material layer 64 is formed and the negative electrode current collector 62 is exposed) extend off outward from both ends of the wound electrode body 20 in the winding axis direction (i.e., sheet width direction orthogonal to the longitudinal direction). The positive electrode active material layer non-formed portion 52a and the negative electrode active material layer non-formed portion 62a function as current collection portions. The positive electrode current collector plate 42a and the negative electrode current collector plate 44a are respectively joined to the positive electrode active material layer non-formed portion 52a and the negative electrode active material layer non-formed portion 62a. The shapes of the positive electrode active material layer non-formed portion 52a and the negative electrode active material layer non-formed portion 62a are not limited to the illustrated example. The positive electrode active material layer non-formed portion 52a and the negative electrode active material layer non-formed portion 62a may be formed as current collection tabs processed into predetermined shapes.

As the positive electrode sheet 50, the positive electrode 50 according to the embodiment described above is used. In this example, in the positive electrode sheet 50, the positive electrode active material layer 54 is formed on both surfaces of the positive electrode current collector 52.

As the negative electrode current collector 62 constituting the negative electrode sheet 60, a known negative electrode current collector for use in a lithium ion secondary battery may be used, and examples of the negative electrode current collector include sheets or foil of highly conductive metals (e.g., copper, nickel, titanium, and stainless steel). The negative electrode current collector 52 is desirably copper foil.

Dimensions of the negative electrode current collector 62 are not specifically limited, and may be appropriately determined depending on battery design. In the case of using copper foil as the negative electrode current collector 62, the thickness thereof is not specifically limited, and is, for example, 5 µm or more and 35 µm or less and desirably 7 µm or more and 20 µm or less.

The negative electrode active material layer 64 includes a negative electrode active material. Examples of the negative electrode active material include carbon materials such as graphite, hard carbon, and soft carbon. Graphite may be natural graphite or artificial graphite, and may be amorphous carbon-coated graphite in which graphite is coated with an amorphous carbon material.

The average particle size (median particle size: D50) of the negative electrode active material is not specifically limited, and is, for example, 0.1 µm or more and 50 µm or less, is desirably 1 µm or more and 25 µm or less, and more desirably 5 µm or more and 20 µm or less. It should be noted that the average particle size (D50) of the negative electrode active material can be obtained by, for example, a laser diffraction and scattering method.

The negative electrode active material layer 64 can include components other than the active material, such as a binder or a thickener. Examples of the binder include styrenebutadiene rubber (SBR) and polyvinylidene fluoride (PVDF). Examples of the thickener include carboxymethyl cellulose (CMC).

The content of the negative electrode active material in the negative electrode active material layer is desirably 90 mass% or more, and more desirably 95 mass% or more and 99 mass% or less. The content of the binder in the negative electrode active material layer is desirably 0.1 mass% or more and 8 mass% or less, and more desirably 0.5 mass% or more and 3 mass% or less. The content of the thickener in the negative electrode active material layer is desirably 0.3 mass% or more and 3 mass% or less, and more desirably 0.5 mass% or more and 2 mass% or less.

The thickness of the negative electrode active material layer 64 is not specifically limited, and is, for example, 10 µm or more and 300 µm or less, and desirably 20 µm or more and 200 µm or less.

Examples of the separator 70 include a porous sheet (film) of a resin such as polyethylene (PE), polypropylene (PP), polyester, cellulose, and polyamide. The porous sheet may have a single-layer structure or a laminated structure of two or more layers (e.g., three-layer structure in which PP layers are stacked on both surfaces of a PE layer). A heat-resistance layer (HRL) may be provided on a surface of the separator 70.

A nonaqueous electrolyte 80 typically includes a nonaqueous solvent and a supporting electrolyte (electrolyte salt). As the nonaqueous solvent, various organic solvents such as carbonates, ethers, esters, nitriles, sulfones, and lactones for use in an electrolyte of a typical lithium ion secondary battery can be used without any particular limitation. Specific examples of such a nonaqueous solvent include ethylene carbonate (EC), propylene carbonate (PC), diethyl carbonate (DEC), dimethyl carbonate (DMC), ethyl methyl carbonate (EMC), monofluoroethylene carbonate (MFEC), difluoroethylene carbonate (DFEC), monofluoromethyl difluoromethyl carbonate (F-DMC), and trifluorodimethyl carbonate (TFDMC). Such nonaqueous solvents may be used alone or two or more of them may be used in combination.

Desired examples of the supporting electrolyte include lithium salts (desirably LiPF₆) such as LiPF₆, LiBF₄, and lithium bis(fluorosulfonyl)imide (LiFSI). The concentration of the supporting electrolyte is desirably 0.7 mol/L or more and 1.3 mol/L or less.

The nonaqueous electrolyte 80 may include components not described above, for example, various additives exemplified by: a film forming agent such as an oxalato complex; a gas generating agent such as biphenyl (BP) or cyclohexylbenzene (CHB); and a thickener, to the extent that the effects of the present disclosure are not significantly impaired.

The thus-configured lithium ion secondary battery 100 has large capacity and high resistance to capacity degradation after repetitive charging and discharging. The lithium ion secondary battery 100 is applicable to various applications. Specific examples of the application of the lithium ion secondary battery 100 include: portable power supplies for personal computers, portable electronic devices, and portable terminals; vehicle driving power supplies for electric vehicles (BEV), hybrid electric vehicles (HEV), and plug-in hybrid electric vehicles (PHEV); and storage batteries for small power storage devices, and among these, vehicle driving power supplies are especially desirable. The lithium ion secondary battery 100 can be used in a battery pack in which a plurality of batteries are typically connected in series and/or in parallel.

The foregoing description is directed to the square lithium ion secondary battery 100 including the flat wound electrode body 20 as an example. Alternatively, the nonaqueous electrolyte secondary battery disclosed here can be configured as a lithium ion secondary battery including a stacked-type electrode body (i.e., electrode body in which a plurality of positive electrodes and a plurality of negative electrodes are alternately stacked). The stacked-type electrode body may include a plurality of separators each interposed between one positive electrode and one negative electrode or may include one separator in such a manner that positive electrodes and negative electrodes are alternately stacked with one separator being repeatedly folded.

The nonaqueous electrolyte secondary battery disclosed here may be configured as a coin type lithium ion secondary battery, a button type lithium ion secondary battery, a cylindrical lithium ion secondary battery, or a laminated case type lithium ion secondary battery. The nonaqueous electrolyte secondary battery disclosed here may be configured as a nonaqueous electrolyte secondary battery other than a lithium ion secondary battery, by a known method.

On the other hand, the positive electrode active material according to this embodiment can be used for constituting an all-solid-state secondary battery (especially all-solid-state lithium ion secondary battery) according to a known method by using a solid electrolyte instead of the nonaqueous electrolyte 80.

Examples of the present disclosure will now be described, but are not intended to limit the present disclosure to these examples.

### <Examples 1 to 5 and Comparative Examples 1 to 7>

As a positive electrode active material, LiNi_{0.6}CO_{0.2}Mn_{0.2}O₂ as first lithium composite oxide particles and LiNi_{0.55}Co_{0.2}Mn_{0.25}O₂ as second lithium composite oxide particles were prepared in a mass ratio shown in Table 1. The first lithium composite oxide particles and the second lithium composite oxide particles used had particle properties shown in Table 1. In Comparative Examples 3 and 4, LiNi_{0.6}Co_{0.2}Mn_{0.2}O₂ as the first lithium composite oxide particles was used alone as the positive electrode active material, and in Comparative Examples 5 and 6, LiNi_{0.55}Co_{0.2}Mn_{0.25}O₂ as the second lithium composite oxide particles was used alone as the positive electrode active material. This positive electrode active material, acetylene black (AB) as a conductive agent, and polyvinylidene fluoride (PVDF) as a binder were mixed in a mass ratio of positive electrode active material : AB : PVDF = 97.5 : 1.5 : 1.0. An appropriate amount of N-methyl-2-pyrrolidone (NMP) was added to the resulting mixture, thereby preparing a slurry for forming a positive electrode active material layer.

The slurry for forming a positive electrode active material layer was applied to both surfaces of a positive electrode current collector made of aluminum foil with a thickness of 15 µm and dried. Thereafter, the resulting film was roll-pressed by rolling rollers, thereby obtaining a positive electrode sheet.

Graphite (C) as a negative electrode active material, styrene butadiene rubber (SBR) as a binder, and carboxymethyl cellulose (CMC) as a thickener were mixed in ion-exchanged water in a mass ratio of C : SBR : CMC = 98 : 1 : 1, thereby preparing a slurry for forming negative electrode active material layer. The slurry for forming negative electrode active material layer was applied onto copper foil with a thickness of 8 µm. Thereafter, the resulting film was dried and roll-pressed to a predetermined thickness, thereby preparing a negative electrode sheet.

As a separator, a porous polyolefin sheet having a three-layer structure of PP/PE/PE with a thickness of 24 µm was prepared. Positive electrode sheets and negative electrode sheets were alternately stacked with separators interposed therebetween to obtain a laminated body. Then, the laminated body was wound to obtain a wound body, and the wound body was pressed into a flat shape, thereby obtaining a flat wound electrode body.

Electrode terminals were attached to an electrode body, and the electrode body is inserted in a battery case and welded thereto. Then, a nonaqueous electrolyte was injected into the battery case. The nonaqueous electrolyte used was one obtained by dissolving LiPF₆ as a supporting electrolyte at a concentration of 1.2 mol/L in a mixed solvent including ethylene carbonate (EC), ethyl methyl carbonate (EMC), and dimethyl carbonate (DMC) in a volume ratio of EC : EMC : DMC = 30 : 30 : 40. Subsequently, the battery case was sealed, thereby obtaining evaluation lithium ion secondary batteries of Examples 1 to 4 and Comparative Examples 1 to 8.

### <Examples 5 and 6 and Comparative Examples 9 and 10>

As a positive electrode active material, LiNi_{0.35}CO_{0.30}Mn_{0.35}O₂ as first lithium composite oxide particles and LiNi_{0.55}CO_{0.2}Mn_{0.25}O₂ as second lithium composite oxide particles were prepared in a mass ratio shown in Table 2. The first lithium composite oxide particles and the second lithium composite oxide particles used had particle properties shown in Table 2. This positive electrode active material, acetylene black (AB) as a conductive agent, and polyvinylidene fluoride (PVDF) as a binder were mixed in a mass ratio of positive electrode active material : AB : PVDF = 97.5 : 1.5 : 1.0. An appropriate amount of N-methyl-2-pyrrolidone (NMP) was added to the resulting mixture, thereby preparing a slurry for forming a positive electrode active material layer.

Alumina powder, a carbon material as a conductive agent, and polyvinylidene fluoride (PVDF) as a binder were mixed in a mass ratio of alumina powder : carbon material : PVDF = 83 : 3 : 14, and an appropriate amount of N-methyl-2-pyrrolidone (NMP) was added to the resulting mixture, thereby preparing a slurry for forming a protective layer.

The slurry for forming a positive electrode active material layer and the slurry for forming a protective layer were applied to both surfaces of a positive electrode current collector made of aluminum foil with a thickness of 15 µm and dried. The slurry for forming a positive electrode active material layer was applied to a wide range along one end of the positive electrode current collector, and the slurry for forming a protective layer was applied to a narrow range adjacent to the slurry for forming a positive electrode active material layer. Thereafter, the resulting film was roll-pressed by rolling rollers, thereby obtaining a master sheet of a positive electrode sheet. The master sheet was cut into predetermined dimensions, thereby obtaining a plurality of positive electrode sheets.

Graphite (C) as a negative electrode active material, styrene butadiene rubber (SBR) as a binder, and carboxymethyl cellulose (CMC) as a thickener were mixed in ion-exchanged water in a mass ratio of C : SBR : CMC = 98 : 1 : 1, thereby preparing a slurry for forming a negative electrode active material layer . The slurry for forming a negative electrode active material layer was applied onto copper foil with a thickness of 8 µm. Thereafter, the resulting film was dried and roll-pressed to a predetermined thickness, thereby preparing a master sheet of a negative electrode sheet. The master sheet was cut into predetermined dimensions, thereby obtaining a plurality of negative electrode sheets.

The positive electrode sheets and the negative electrode sheets obtained as described above are alternately stacked with porous polyolefin sheets each serving as a separator and having a three-layer structure of PP/PE/PE and a thickness of 24 µm interposed therebetween. In this manner, a laminated electrode body was obtained.

Electrode terminals were attached to an electrode body, and the electrode body was inserted in a battery case and welded thereto. Then, a nonaqueous electrolyte was injected into the battery case. The nonaqueous electrolyte used was one obtained by dissolving LiPF₆ as a supporting electrolyte at a concentration of 1.2 mol/L in a mixed solvent including ethylene carbonate (EC), ethyl methyl carbonate (EMC), and dimethyl carbonate (DMC) in a volume ratio of EC : EMC : DMC = 30 : 30 : 40. Subsequently, the battery case was sealed, thereby obtaining evaluation lithium ion secondary batteries of Examples 5 and 6 and Comparative Examples 9 and 10.

### <Measurement of Porosity and Peak Pore Size of Positive Electrode Active Material Layer>

Test pieces of positive electrodes produced in the examples and the comparative examples were prepared, and placed in cells of a mercury porosimeter "Autopore III9410" (manufactured by SHIMADZU CORPORATION). In a pressure range of 4 psi to 60000 psi, pore distribution of each positive electrode active material layer was measured. Using a pore distribution curve in the pore size range of 0.01 µm to 10 µm, a peak pore size and a porosity were obtained.

### <Measurement of DBP Absorption value of Lithium Composite Oxide Particles>

The DBP absorption value of lithium composite oxide particles was measured according to a method described in JIS K6217-4: 2008. Specifically, 60 g of lithium composite oxide particles was weighed out as a sample, and set in an oil absorption tester "S-500" (manufactured by Asahi Souken Cooporation). While the sample was stirred by a stirring impeller, DBP was dropped, and a torque curve at this time was recorded. An amount of the DBP dropped at a DBP maximum torque of 70% was read, and based on this, a DBP absorption value (mL/100g) was calculated. This measurement was performed three times, and an average of the obtained DBP absorption values was determined as a DBP absorption value of the lithium composite oxide particles used as the sample. Tables 1 and 2 show the results.

### <Measurement of Average Particle Size of Lithium Composite Oxide Particles>

Volume-based particle size distribution of lithium composite oxide particles was measured with a commercially available laser diffraction and scattering particle size distribution analyzer, and a particle size corresponding to a cumulative frequency of 50 vol% from the small-size particle side was obtained as an average particle size (D50) of lithium composite oxide particles. Tables 1 and 2 show the results.

### <Measurement of Average Primary Particle Diameter of Lithium Composite Oxide Particles>

A microscopic image of lithium composite oxide particles was acquired with a scanning electron microscope. Long diameters of 50 or more arbitrarily selected primary particles were obtained with image analysis type particle size distribution measurement software "Mac-View." An average of the obtained long diameters was calculated and employed as an average primary particle size of lithium composite oxide particles. Tables 1 and 2 show the results.

### <Evaluation of Initial Capacity and Cycle Characteristics>

Each evaluation lithium ion secondary battery was charged to 4.2 V with a constant current of 0.1 C at room temperature, and then discharged to 2.5 V with a constant current of 0.1 C. A discharge capacity at this time was obtained and defined as an initial capacity. Supposing an initial capacity of Comparative Example 1 is 100, initial capacity ratios of examples and other comparative examples were obtained. Tables 1 and 2 show the results.

The evaluation lithium ion secondary battery was placed at 25°C. A charging and discharging process in which the evaluation lithium ion secondary battery was charged to 4.2 V with a constant current at 2 C, rested for 10 minutes, charged to 3.0 V with a constant current at 2 C, and then rested for 10 minutes was repeated in 500 cycles. A discharge capacity after 500 cycles was obtained in a manner similar to that for the initial capacity. From (discharge capacity of 500 cycles of charging and discharging process / initial capacity) × 100, a capacity retention rate (%) was obtained as an index of cycle characteristics. Tables 1 and 2 show the results.

### <Output Characteristics>

As an index of output characteristics, an initial resistance was evaluated. Each evaluation lithium ion secondary battery fabricated as described above was adjusted to have an SOC of 50%, and then placed in an environment at 25°C. Discharging was performed for two seconds with various current values, and battery voltages after discharging with the current values were measured. Current values and battery voltages were plotted to obtain I-V characteristics in discharge, and from the slope of the obtained line, an IV resistance (Ω) in discharge was obtained as an initial resistance.

### [Table 1]

**Table 1**

| | First lithium composite oxide particles (LiNi_{0.6}Co_{0.2}Mn_{0.2}O₂) | | | Second lithium composite oxide particles (LiNi_{0.55}CO_{0.20}Mn_{0.25}O₂) | | | Mixing ratio of lithium composite oxide particles (mass ratio) (first: second) | Positive electrode active material layer peak pore size | Positive electrode active material layer porosity | Initial capacity ratio | Output | Cycle characteristics |
|---|---|---|---|---|---|---|---|---|---|---|---|---|
| | Primary particle size | D50 | DBP absorption value | Primary particle size | D50 | DBP absorption value | | | | | (initial resistance) | (capacity retention rate) |
| | (µm) | (µm) | (ml/100g) | (µm) | (µm) | (ml/100g) | | (µm) | (%) | | (mΩ) | (%) |
| Example 1 | 1.5 | 3.9 | 21.3 | 0.2 | 17.2 | 18.0 | 50:50 | 0.505 | 18 | 120 | 1.4 | 90 |
| Example 2 | 1.5 | 3.9 | 21.3 | 0.2 | 17.2 | 18.0 | 30:70 | 0.409 | 17 | 120 | 1.5 | 90 |
| Example 3 | 1.5 | 3.9 | 21.3 | 0.2 | 17.2 | 18.0 | 60:40 | 0.516 | 19 | 120 | 1.3 | 90 |
| Example 4 | 0.2 | 4.0 | 25.3 | 2.5 | 17.5 | 14.1 | 30:70 | 0.499 | 20 | 110 | 1.4 | 90 |
| Comparative Example 1 | 1.5 | 3.9 | 21.3 | 0.2 | 17.2 | 18.0 | 20:80 | 0.521 | 21 | 100 | 1.3 | 90 |
| Comparative Example 2 | 1.5 | 3.9 | 21.3 | 0.2 | 17.2 | 18.0 | 70:30 | 0.537 | 21 | 102 | 1.3 | 90 |
| Comparative Example 3 | 1.5 | 3.9 | 21.3 | - | - | - | 100:0 | 0.706 | 22 | 90 | 1.1 | 80 |
| Comparative Example 4 | 0.2 | 4.0 | 25.3 | - | - | - | 100:0 | 0.877 | 24 | 80 | 1.1 | 70 |
| Comparative Example 5 | - | - | - | 2.5 | 17.5 | 14.1 | 0:100 | 0.390 | 20 | 110 | 2.5 | 90 |
| Comparative Example 6 | - | - | - | 0.2 | 17.2 | 18.0 | 0:100 | 0.554 | 21 | 100 | 1.3 | 90 |
| Comparative Example 7 | 1.5 | 3.9 | 21.3 | 2.5 | 17.5 | 14.1 | 50:50 | 0.337 | 16 | 120 | 2.6 | 90 |
| Comparative Example 8 | 0.2 | 4.0 | 25.3 | 0.2 | 17.2 | 18.0 | 30:70 | 0.600 | 21 | 102 | 1.3 | 85 |

### [Table 2]

**Table 2**

| | First lithium composite oxide particles (LiNi_{0.35}Co_{0.30}Mn_{0.35}O₂) | | | Second lithium composite oxide particles (LiNi_{0.55}Co_{0.20}Mn_{0.25}O₂) | | | Mixing ratio of lithium composite oxide particles (mass ratio) (first:second) | Positive electrode active material layer peak pore size (µm) | Positive electrode active material layer porosity (%) | Initial capacity ratio | Output | Cycle characteristics |
|---|---|---|---|---|---|---|---|---|---|---|---|---|
| | Primary particle size (µm) | D50 (µm) | DBP absorption value (ml/100g) | Primary particle size (µm) | D50 (µm) | DBP absorption value (ml/100g) | | | | | (initial resistance) (mΩ) | (capacity retention rate) (%) |
| Example 5 | 1.8 | 3.8 | 20.0 | 0.2 | 17.2 | 18.0 | 50:50 | 0.450 | 17 | 100 | 1.4 | 90 |
| Example 6 | 0.2 | 3.5 | 30.0 | 2.5 | 17.5 | 14.1 | 30:70 | 0.545 | 19 | 96 | 1.3 | 90 |
| Comparative Example 9 | 0.2 | 3.5 | 30.0 | 0.2 | 17.2 | 18.0 | 30:70 | 0.612 | 20 | 90 | 1.1 | 85 |
| Comparative Example 10 | 1.8 | 3.8 | 20.0 | 2.5 | 17.5 | 14.1 | 50:50 | 0.395 | 16 | 102 | 2.3 | 90 |

From the results shown in Tables 1 and 2, it can be understood that in a comparison between batteries using positive electrode active materials having the same composition of lithium composite oxide particles, when the positive electrode active material layer includes particles of lithium composite oxide having a layered structure as the positive electrode active material, and the positive electrode active material layer has a porosity of 16.5% to 20.5% and a peak pore size in pore distribution of the positive electrode active material layer measured by mercury intrusion porosimetry is 0.400 µm to 0.550 µm, initial capacity is large and initial resistance is low (i.e., output is high). In this case, it can be understood that the capacity retention rate after charging and discharging cycles is also high. Thus, it can be understood that the positive electrode disclosed here can increase capacity and output of the nonaqueous electrolyte secondary battery. It can be understood that the positive electrode disclosed here can provide the nonaqueous electrolyte secondary battery with high resistance to capacity degradation in repetitive charging and discharging.

Specific examples of the present disclosure have been described in detail hereinbefore, but are merely illustrative examples, and are not intended to limit the scope of claims. The techniques described in claims include various modifications and changes of the above exemplified specific examples.

## Claims

1. A positive electrode (50) comprising:
a positive electrode current collector (52); and
a positive electrode active material layer (54) supported by the positive electrode current collector (52), wherein
the positive electrode active material layer (54) includes particles of a lithium composite oxide having a layered structure as a positive electrode active material,
the positive electrode active material layer (54) has a porosity of 17% to 20%, and
a peak pore size in pore distribution of the positive electrode active material layer (54) measured by mercury intrusion porosimetry is 0.400 µm to 0.550 µm.

2. The positive electrode (50) according to claim 1, wherein the positive electrode active material layer (54) has a porosity of 17% to 19%.

3. The positive electrode (50) according to claim 1 or 2, wherein the peak pore size is 0.500 µm to 0.530 µm.

4. The positive electrode (50) according to any one of claims 1 to 3, wherein the lithium composite oxide is a nickel cobalt manganese composite oxide.

5. The positive electrode (50) according to claim 4, wherein a content of nickel in entire metal elements except for lithium in the lithium nickel cobalt manganese composite oxide is 55 mol% or more.

6. A nonaqueous electrolyte secondary battery (100) comprising:
the positive electrode (50) according to any one of claims 1 to 5;
a negative electrode (60); and
a nonaqueous electrolyte (80).
